# EUROPEAN PATENT APPLICATION

(11) **EP 4 027 095 A1**
(43) Date of publication of application: **13.07.2022**
(21) Application number: 20861169.9
(22) Date of filing: 02.09.2020
(51) Int. Cl.: F28F 3/00, H01M 10/613, H01M 10/625, H01M 10/651, H01M 10/6556, H01M 10/6568, F28F 19/04

(54) **HEAT EXCHANGER**

(30) Priority: 04.09.2019 JP 2019161264
(71) Applicant: Showa Denko K.K., Tokyo 105-8518 (JP)
(72) Inventor: IGAWA Shunsuke, Oyama-shi, Tochigi 323-8678 (JP); YAMANAKA, Masaki, Oyama-shi, Tochigi 323-8678 (JP)
(74) Representative: Hoffmann Eitle
(86) International application number: PCT/JP2020/033227
(87) International publication number: WO 2021/045084

(57) **Abstract**

Provided is a heat exchanger capable of improving the fluidity of a heat exchange medium in an inlet/outlet formation portion. The present invention is directed to a heat exchanger provided with a heat transfer portion 2 configured as a heat exchange flow path 20, the heat transfer portion including a hollow portion therein through which a heat exchange medium flows, and inlet/outlet formation portion configured to introduce/discharge the heat exchange medium, an inside of the inlet/outlet formation portion being connected to the heat exchange flow path in a communicable manner. At least a part of an outer surface of the heat transfer portion 2 is configured by a coating sheet 6 formed of a laminate material in which a resin coating layer is provided on at least one surface side of a metal heat transfer layer. An external thickness T1 of the inlet/outlet formation portion 1a, 1b is formed to be thicker than an external thickness T2 of the heat transfer portion 2.

## Description

### Technical Field

The present invention relates to a heat exchanger in which a laminate material in which a resin coating layer is laminated on a metal heat transfer layer is arranged on an outer surface portion of the heat exchanger.

### Background of the Invention

Hybrid vehicles (HEVs), electric vehicles (EVs), etc., are equipped with a battery device for supplying power to drive an electric motor. As such a battery device, a battery device in the form of a battery pack in which a plurality of small single batteries composed of various secondary batteries, such as, e.g., lithium secondary batteries, is connected in series or in parallel is generally used. Especially in recent years, in order to extend the cruising range of an electric vehicle, further capacityenhancing of the battery device is being promoted by combining several battery packs in series or in parallel.

On the other hand, the performance and the service life of a lithium-ion secondary battery, which is often used as a battery device, vary greatly depending on the operating temperature. Therefore, in order to efficiently use the lithium secondary battery for a long period of time, it is preferable to control the lithium secondary battery at an appropriate temperature. However, in the case of using the battery in the form of a plurality of battery packs as described above, since the plurality of battery packs is closely arranged, it is difficult to effectively discharge the heat generated from each battery pack or each single battery. Therefore, the temperature of each battery pack is increased, which may deteriorate the performance and the service life.

Under the circumstance, a technique for cooling a plurality of battery packs using a thin heat exchanger as shown in Patent Document 1 listed below is being developed. The heat exchanger includes a flat tube formed by coupling two metallic dish-shaped plates to face each other. This flat tube is placed between adjacent battery packs of the plurality of battery packs. The heat generated from the respective single batteries of the battery pack is released to the outside through the refrigerant (coolant) flowing through the flat tube.

With such a technical background, as in other automobile components, the heat exchanger for cooling a plurality of battery packs as an automobile battery device is required to be as thin, compact, lightweight, and low-cost as possible. As part of this effort, the use of a heat exchanger using a highly flexible laminate material is being considered.

The heat exchanger using a laminate material is provided with a packaging body formed of a laminate material in which a resin coating layer is laminated on both sides of a metal heat transfer layer. A cooling fluid introduced from the inlet (inlet/outlet) of the packaging body flows through the inside of the packaging body and then flows out of the outlet (inlet/outlet) of the packaging body. The battery pack is cooled by exchanging heat between the cooling fluid circulating the interior of the packaging body and a battery such as a battery pack in contact with the outer surface of the packaging body.

### Prior Art Document

### Patent Document

Patent Document 1: Japanese Unexamined Patent Application Publication No. 2012-199149

### SUMMARY OF THE INVENTION

### Problems to be Solved by the Invention

However, in the heat exchanger using the laminate material as described above, the packaging body is low in rigidity. Therefore, it is required to provide, for example, a reinforcing member at the inlet/outlet formation portion. Doing so restricts the flow path of the inlet/outlet formation portion, which may reduce the flow properties of the cooling fluid. In particular, adopting a thin packaging body may significantly reduce the flow properties of the cooling fluid, which causes a problem that it is difficult to obtain sufficient heat exchange performance.

The preferred embodiments of the present invention have been made in view of the above-described and/or other problems in the related art. The preferred embodiments of the present invention can significantly improve upon existing methods and/or devices.

The present invention has been made in view of the above-described problems. An object of the present invention is to provide a heat exchanger using a laminate material capable of improving flow properties of a heat exchange medium at an inlet/outlet formation portion while achieving thinning, thereby attaining sufficient heat exchange performance.

Other objects and advantages of the present invention will be apparent from the following preferred embodiments.

### Means for Solving the Problems

In order to solve the above-described problems, the present invention is provided with the following means.
[1] A heat exchanger comprising:
   a heat transfer portion configured as a heat exchange flow path, the heat transfer portion including a hollow interior portion therein through which a heat exchange medium flows; and
   an inlet/outlet formation portion provided with an inlet/outlet for introducing/discharging the heat exchange medium, an interior of the inlet/outlet formation portion being connected to the heat exchange flow path in a communicable manner,
   wherein heat exchange is performed between the heat exchange medium passing through the heat exchange flow path and a heat exchange target member arranged on an outer surface of the heat transfer portion,
   wherein at least a part of the outer surface of the heat transfer portion is configured by a coating sheet formed of a laminate material in which a resin coating layer is provided on at least one surface side of a metal heat transfer layer, and
   wherein an external thickness of the inlet/outlet formation portion is formed to be thicker than an external thickness of the heat transfer portion.
      Note that in the present invention, the inlet/outlet formation portion and the heat transfer portion are arranged along the flow path direction of the heat exchange flow path. Further, in the present invention, the inlet/outlet formation portion is arranged at the edge portion of the heat transfer portion.
[2] The heat exchanger as recited in the above-described Item [1],
   wherein the inlet/outlet formation portion is provided with a reinforcing member having a function as a spacer for maintaining a thickness of the inlet/outlet formation portion.
[3] The heat exchanger as recited in the above-described Item [1] or [2],
   wherein a spacer member configured to maintain a height of the heat exchange flow path is provided in the hollow interior portion of the heat transfer portion.
[4] The heat exchanger as recited in any one of the above-described Items [1] to [3],
   wherein the external thickness of the heat transfer portion is set to 5 mm or less.
[5] The heat exchanger as recited in any one of the above-described Items [1] to [4],
   wherein a plurality of heat exchange flow paths extends from one end edge portion of the heat transfer portion toward the other end edge portion thereof and is arranged in parallel to each other,
   wherein the inlet/outlet formation portion includes an upstream-side header member arranged along an upstream-side end portions of the plurality of heat exchange flow paths and a downstream-side header member arranged along downstream-side end portions of the plurality of heat exchange flow paths, and
   wherein the heat exchange medium flowed into the upstream-side header member via the inlet/outlet is divided and flowed into each of the plurality of heat exchange flow paths, and the divided heat exchange mediums flowed out of the plurality of heat exchange flow paths are merged in the downstream-side header member and flowed out of the inlet/outlet of the downstream-side header member.
[6] The heat exchanger as recited in any one of the above-described Items [1] to [5],
   wherein when one surface side in a thickness direction is defined as a front surface side, and the other surface side in the thickness directions is defined as a rear surface side,
   a front surface side of the inlet/outlet formation portion is arranged so as to protrude on the front surface side with respect to a front surface side of the heat transfer portion, and the rear surface side of the inlet/outlet formation portion is arranged so as to protrude on the rear surface side with respect to a rear surface side of the heat transfer portion.
[7] The heat exchanger as recited in any one of the above-described Items [1] to [6],
   wherein a plurality of inlet/outlet formation portions is provided, and
   wherein the inlet/outlets of the plurality of inlet/outlet formation portions are opened toward one side in a thickness direction.
[8] The heat exchanger as recited in any one of the above-described Items [1] to [7],
   wherein the heat transfer portion is provided on both sides of the inlet/outlet formation portion.
[9] The heat exchanger as recited in any one of the above-described Items [1] to [8],
   wherein a height of the heat exchange flow path is set to 3 mm or less.
[10] The heat exchanger as recited in any one of the above-described Items [1] to [9],
   wherein a spacer member for maintaining a height of the heat exchange flow path is provided in the hollow portion of the heat transfer portion,
   wherein a reinforcing member having a function as a spacer for maintaining a thickness is provided in the inlet/outlet formation portion, and
   wherein the spacer member and the reinforcing member are integrally formed.
[11] The heat exchanger as recited in any one of the above-described Items [1] to [10],
   wherein the coating sheet is arranged so as to cover an entire area of the heat transfer portion.
[12] The heat exchanger as recited in any one of the above-described Items [1] to [11],
   wherein the coating sheet is arranged so as to cover an entire outer peripheral surface.
[13] The heat exchanger of any one of the above-described Items [1] to [12],
   wherein at least a part of the coating sheet is configured by a molded product.

### Effects of the Invention

According to the heat exchanger of the above-described invention [1], the inlet/outlet formation portion is formed to be thicker than the heat transfer portion. This configuration can ensure a sufficient flow path in the inlet/outlet formation portion while improving the flow properties and the heat exchange performance and also can ensure the thinning of the heat transfer portion where a heat exchange target member such as a battery is placed. This in turn can reduce the size as a whole. Note that the heat exchange target member is not placed at the inlet/outlet formation portion. This gives room in terms of space. Thus, the increase in the thickness causes no interference with other components, resulting in no adverse effects.

According to the heat exchanger of the above-described invention [2], the reinforcing member is provided at the inlet/outlet formation portion. Therefore, the thickness of the inlet/outlet formation portion is sufficiently secured even against compressive stress and the like. This can improve the flow properties of the heat exchange medium flowing through the inside, thereby sufficiently ensuring the heat exchange performance.

According to the heat exchanger of the above-described invention [3], the spacer member is arranged at the heat transfer portion. For this reason, the flow path cross-section of the heat exchange flow path of the heat transfer portion can also be sufficiently secured. From this point of view as well, the flow properties of the heat exchange medium can be improved, thereby improving the heat exchange performance.

According to the heat exchanger of the above-described invention [4], it is possible to improve the heat exchange performance more assuredly while attaining the thinning more assuredly.

According to the heat exchanger of the above-described invention [5], the heat exchanger is a parallel flow type. Therefore, the heat exchange medium is distributed evenly through the plurality of heat exchange flow paths arranged in parallel. Therefore, uniform heat exchange can be performed evenly in the entire heat exchange target member, which in turn can further improve the heat exchange performance.

According to the heat exchanger of the above-described invention [6], it is possible to improve the flow properties of the heat exchange medium at the inlet/outlet formation portion while attaining further thinning, thereby sufficiently ensuring the heat exchange performance.

According to the heat exchanger of the above-described invention [7], the plurality of inlet/outlets is opened in the same direction. Therefore, all pipes to be connected to the inlet/outlets can be connected from one direction (from the front surface side). This reduces the space for piping routing. Therefore, it is possible to further reduce the size.

According to the heat exchanger of the above-described invention [8], it is possible to increase the number of the heat transfer portions to the inlet/outlet formation portions and also possible to perform heat exchange more efficiently by performing heat exchange of more numbers of heat exchange target members while limiting the number of the inlet/outlet formation portions.

According to the heat exchanger of the above-described invention [9], it is possible to improve the heat exchange performance further assuredly while attaining the thinning more assuredly.

According to the heat exchanger of the above-described invention [10], the required members are integrated. Therefore, the number of parts can be reduced, which in turn can simplify the structure and improve the assembly workability.

According to the heat exchanger of the above-described inventions [11] and [12], it is possible to attain the effective coating by the coating sheets, thereby assuredly preventing the occurrence of defects, such as, e.g., liquid leakage.

According to the heat exchanger of the above-described invention [13], even if the shape is complicated, it is possible to assuredly prevent the occurrence of defects, such as, e.g., liquid leakage, while reducing the number of parts.

### BRIEF DESCRIPTION OF THE DRAWINGS

FIG. 1 is a cross-sectional view showing a battery cooling unit using a heat exchange panel as a heat exchanger according to a first embodiment of the present invention.
FIG. 2 is an enlarged cross-sectional view showing an inlet/outlet formation portion and the periphery thereof of the battery cooling unit of the first embodiment.
FIG. 3 is a perspective view showing the heat exchange panel of the first embodiment in a state in which a coating sheet is removed.
FIG. 4 is a plan view for explaining a flow path of the heat exchange panel of the first embodiment.
FIG. 5 is a cross-sectional view showing the battery cooling unit using the heat exchange panel P as a heat exchanger according to a second embodiment of the present invention.
FIG. 6 is a perspective view showing the heat exchange panel of the second embodiment in a state in which the coating sheet is removed.
FIG. 7 is a plan view for explaining a flow path of the heat exchange panel of the second embodiment.
FIG. 8 is a plan view for explaining a flow path of the heat exchange panel as a heat exchanger of a third embodiment of the present invention.
FIG. 9 is a cross-sectional view showing a heat exchange panel as a heat exchanger that is a fourth embodiment of the present invention.
FIG. 10 is a perspective view showing the heat exchange panel of the fourth embodiment.
FIG. 11 is a cross-sectional view showing a first usage example of the heat exchange panel as a heat exchanger of the present invention.
FIG. 12 is a cross-sectional view showing a second usage example of the heat exchange panel as a heat exchanger of the present invention.
FIG. 13 is an enlarged cross-sectional view showing the inlet/outlet formation portion and the periphery thereof of the heat exchanger, which is a first modification of the present invention.
FIG. 14 is a cross-sectional view showing a battery cooling unit using the heat exchange panel as a heat exchanger, which is a second modification of the present invention.
FIG. 15 is a perspective view showing the heat exchange panel of the second modification.
FIG. 16 is an enlarged cross-sectional view showing an inlet/outlet formation portion and the periphery thereof of a thin heat exchanger as a first reference example.
FIG. 17 is an enlarged cross-sectional view showing an inlet/outlet formation portion and the periphery thereof of a thick heat exchanger as a second reference example.

### EMBODIMENTS FOR CARRYING OUT THE INVENTION

### <First Embodiment>

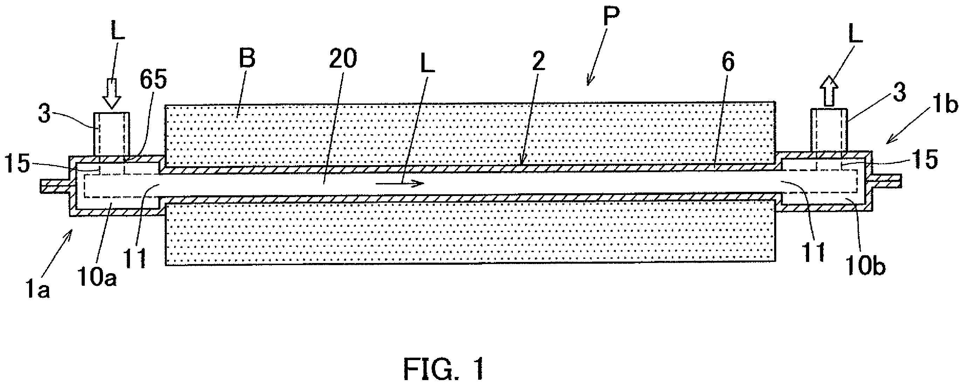

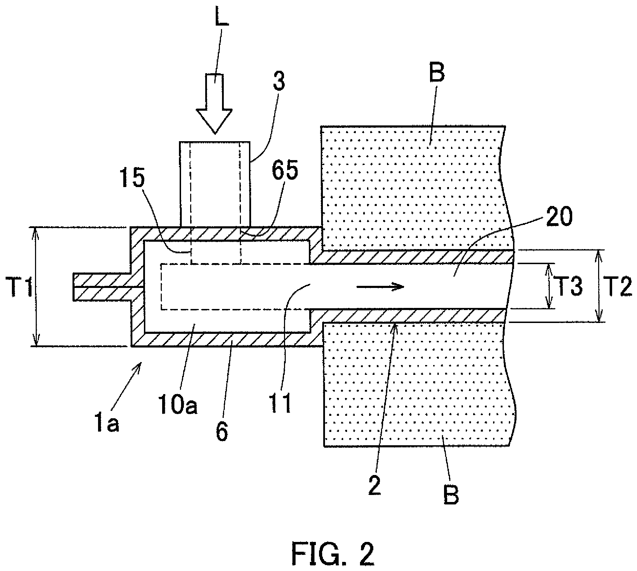

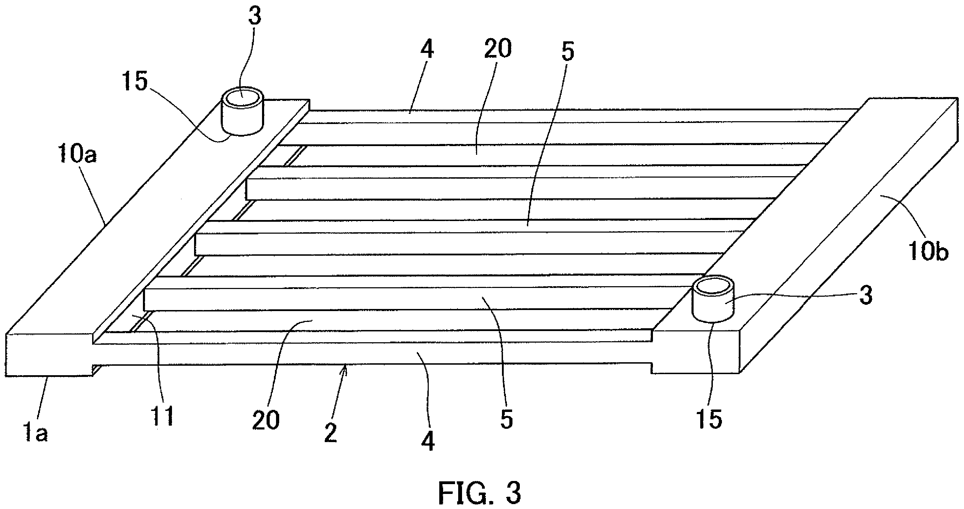

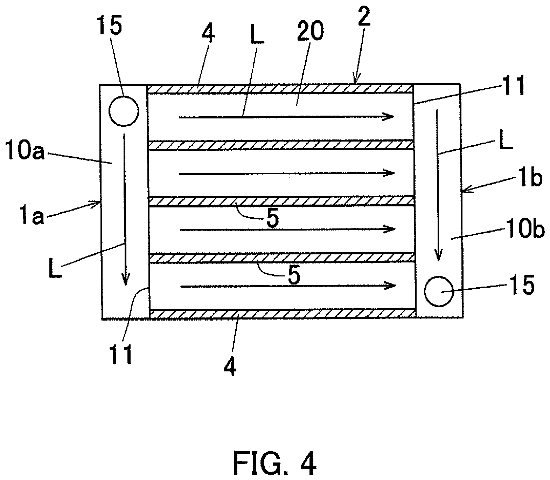

FIG. 1 is a cross-sectional view showing a battery cooling unit using a heat exchange panel as a heat exchanger according to a first embodiment of the present invention. FIG. 2 is an enlarged cross-sectional view showing an inlet/outlet formation portion and the periphery thereof of the battery cooling unit. FIG. 3 is a perspective view showing the heat exchange panel in a state in which a coating sheet is removed. FIG. 4 is a plan view for explaining a flow of a cooling fluid L in the heat exchange panel P. Note that in the following description, in order to facilitate understanding of the present invention, the following description will be made by defining as follows. The vertical direction in FIG. 1 is defined as the "thickness direction" of this heat exchange panel P. The left and right direction is defined as the "longitudinal direction" of this heat exchange panel P. The direction perpendicular to the paper plane of FIG. 1 (the vertical direction in FIG. 4) is defined as the "transverse direction" of this heat exchange panel P. Further, one side in the thickness direction (the upper side in FIG. 1) is described as the "front surface side", and the other side (the lower side in FIG. 1) is described as the "rear surface side". Needless to say, the installation state (orientation) of the heat exchanger (heat exchange panel) of the present invention in actual use is not limited to the state shown in FIG. 1. Note that the heat exchanger (heat exchange panel) of the present invention may be arranged in any orientation.

As shown in FIGS. 1 to 4, the heat exchange panel P of the first embodiment is used to cool a battery. This battery includes a single battery (battery cell), an assembled battery (battery pack), and other batteries for powering an electric motor of an electric vehicle or the like. This heat exchange panel (cooling device) P is provided with a pair of an upstream-side inlet/outlet formation portion 1a and a downstream-side inlet/outlet formation portion 1b provided at both end edge portions in the longitudinal direction, and a heat transfer portion 2 provided between the pair of inlet/outlet formation portions 1a and 1b.

At the pair of inlet/outlet formation portions 1a and 1b, a header member 10a and a header member 10b are arranged, respectively. The pair of the upstream-side header member 10a and the downstream-side header member 10b is arranged at both end edge portions in the transverse direction and arranged in parallel to each other.

The header members 10a and 10b are each formed in a substantially rectangular tube shape or an elongated substantially box shape. On the heat transfer portion 2 side (inner side) of the outer peripheral wall, an opening portion 11 is formed. In the header member 10a(10b), although its interior space is opened inward through the opening portion 11, both end portions in the length direction (in the transverse direction) are closed.

Note that this embodiment will be described by using the definitions described as follows. That is, the header member 10a on the left side in FIG. 1 is defined as an upstream-side (inflow-side) header member. The header member 10b on the right side in FIG. 1 is defined as a downstream-side (outflow-side) header member. In the present invention, however, the header member 10a on the left side in FIG. 1 may be configured as a downstream-side header member, and the header member 10b on the right side may be configured as an upstream-side header member.

Each header member 10a(10b) has an inlet/outlet 15 at the end portion of the front surface side wall in the transverse direction (the lengthwise direction).

To the inlet/outlet 15 of each header member 10a(10b), one end of a joint pipe 3 is fixed. Each joint pipe 3 is arranged so as to protrude on the front surface side of the header member 10a(10b).

As shown in FIG. 3, a plurality of spacer members 4 and 5 along the longitudinal direction is arranged in parallel at equal intervals in the transverse direction so as to extend between both end portions of the pair of header members 10a and 10b. Both end portions of each spacer member 4 and 5 are fixed to the pair of header members 10a and 10b, respectively.

In this embodiment, out of the plurality of spacer members 4 and 5, the spacer members arranged on both sides in the transverse direction will be each referred to as a side frame spacer member 4, and the spacer members arranged on the inner side of the side spacer members 4 and 4 will be each referred to as an intermediate spacer member 5.

Both end portions of the intermediate spacer member 5 are arranged at the opening edge portions of the header members 10a and 10b. The header member 10a(10b) is configured such that the interior space thereof is not blocked by the intermediate spacer members 5 to allow the cooling fluid L to flow along the header member 10 in the transverse direction (in the length direction).

Further, in this embodiment, a heat exchange flow path 20 as a hollow portion is formed between the adjacent spacer members 4 and 5. The heat exchange flow paths 20 extend in the longitudinal direction and are arranged at equal intervals in the transverse direction. In each heat exchange flow path 20, both end portions thereof are connected to the respective interior spaces of the header members 10a and 10b via the opening portions 11 in a communicable manner.

With this configuration, the inlet/outlets 15 and 15 of the header members 10a and 10b are connected to the respective both end portions of the respective heat exchange flow paths 20 via the internal space of the header members 10a and 10b in a communicable manner.

Here, in this embodiment, the thickness dimension of the side frame spacer member 4 and the thickness dimension of the intermediate spacer member 5 are both set to the same dimension. Further, the thickness dimension of the header member 10 is set to be thicker than the thickness dimension of the spacer member 4(5). The thickness dimension (external dimension) T1 of the header member 10a(10b) including the coating sheet 6, which will be described later, is set to be thicker than the thickness dimension (external dimension) T2 of the spacer member 4(5) including the coating sheet 6.

In this embodiment, the header members 10a and 10b and the spacer members 4 and 5 are integrally formed to constitute a skeleton member. The header members 10a and 10b and the spacer members 4 and 5 are each constituted by, for example, a molded product of a hard synthetic resin. These members 4, 5, 10a, and 10b are adhesively fixed by thermal fusion or the like.

Further note that in this embodiment, the entire area of the skeleton member 4, 5, 10a, and 10b is coated with coating sheets 6.

The coating sheet 6 is configured by a laminate material. The laminate material is configured by a heat transfer layer made of a metal foil, such as, e.g., an aluminum foil, and a coating layer made of a thermoplastic resin integrally laminated on both sides of the heat transfer layer. The laminate material used in the present invention may have any layer structure including a three-layer structure like in this embodiment and a four-layer structure as long as the laminate material is configured by at least two or more layers in which a resin coating layer is formed on at least one side of a heat transfer layer.

In this embodiment, two coating sheets 6 coat the skeleton member 4, 5, and 10 from the front and rear surface sides (from the top and bottom sides). The outer peripheral edge portions of the two coating sheets 6, i.e., the front coating sheet and the rear coating sheets, are superposed, and the superposed regions are bonded by thermal fusion or the like. The coating sheet 6 and the corresponding regions of the skeleton member 4, 5, and 10, for example, the coating sheet 6 and both the front and rear surfaces of the header member 10a, 10b and the spacer members 4 and 5, are bonded together by thermal fusion or the like. The entire outer circumference of the skeleton member 4, 5, 10a, and 10b is covered with the coating sheets 6.

Note that the coating sheet 6 is provided with a pipe insertion hole 65 at the position corresponding to the joint pipe 3. The joint pipe 3 is pulled out to the outer side of the coating sheet 6 through the pipe insertion hole 65. The pulled-out end portion (tip end opening portion) of the joint pipe 3 is positioned outside.

The portions of the heat exchange panel P formed as described where the header members 10a and 10b are arranged are configured as the inlet/outlet formation portions 1a and 1b including the coating sheets 6. Further, the portion of the heat exchange panel P where the spacer members 4 and 5 are arranged, that is, the portion where the heat exchange flow paths 20 are arranged, is configured as a heat transfer portion 2 including the coating sheets 6. In this configuration, the coating sheet 6 provided at the inlet/outlet formation portion 1a(1b) is configured as an outer surface portion of the inlet/outlet formation portion 1a(1b). Further, the coating sheet 6 provided at the heat transfer portion 2 is configured as an outer surface portion of the heat transfer portion 2.

Further, in this embodiment, the coating sheet 6 covers the entire area of the skeleton member 4, 5, 10a, and 10b and constitutes the packaging body of the heat exchange panel P. In this embodiment, the packaging body serves as an outer surface portion.

The header member 10a(10b) also serves as a reinforcing member having a function as a spacer for maintaining the thickness-direction space of the coating sheets 6 arranged corresponding to the header member 10a(10b). The spacer member 4(5) has a function as a spacer for maintaining the thickness-direction space of the coating sheets 6 arranged corresponding to the heat exchange flow path P.

Further, in the heat exchange panel P, the front surface side and the rear surface side of the inlet/outlet formation portion 1a(1b) are formed so as to protrude to the front surface side and the rear surface side with respect to the front surface and the rear surface of the heat transfer portion 2, respectively.

Here, in the heat exchange panel P of this embodiment, as described above, the thickness dimension (external thickness) T1 of the inlet/outlet formation portion 1a(1b) is formed to be thicker than the thickness dimension (external thickness) T2 of the heat transfer portion 2. In this embodiment, it is preferable to set the thickness dimension T2 of the heat transfer portion 2 to 5 mm or less, and it is preferable to set the height dimension T3 of the heat exchange flow path 20 of the heat transfer portion 2 to 3 mm or less, as will be described later.

In the heat exchange panel P having the above-described configuration, as shown in FIG. 1, a battery B as a heat exchange target member (cooling target member) is arranged so as to be in contact with the front and rear outer surfaces of the heat transfer portion 2 in the heat exchange panel P, thereby forming a battery cooling unit (heat exchanger unit).

Then, as shown in FIGS. 1 and 4, in this battery cooling unit, an inlet/outlet pipe is connected to the joint pipe 3. A cooling fluid L, such as, e.g., a cooling water and an anti-freezing fluid, as a heat exchange medium (refrigerant) flows into the upstream-side header member 10a from the inlet/outlet 15 via one joint pipe 3 (upstream-side joint pipe 3). The cooling fluid L flows into the respective heat exchange flow paths 20 from the upstream-side end portions thereof through the opening portion 11 while being divided within the header member 10a. The cooling fluid L flowed into each heat exchange flow path 20 passes through the heat exchange flow path 20 and flows into the downstream-side header member 10b from the downstream-side end portion of the heat exchange flow path 20 via the opening portion 11. The inflowed cooling fluids L merge in the downstream-side header member 10b, and then the merged cooling fluid flows out of the joint pipe 3 via the outlet 15 of the downstream-side header member 10b. Thus, the cooling fluid L is caused to flow into the respective heat exchange flow paths 20 to perform heat exchange between the circulating cooling fluid L and the battery B. With this, the battery B is cooled.

In this heat exchange panel P of this embodiment, the battery B is cooled with the heat transfer portion 2. Therefore, the battery B is arranged corresponding to the heat transfer portion 2, but not arranged at the inlet/outlet formation portions 1a(1b) (header members 10a(10b)). Therefore, the region corresponding to the inlet/outlet formation portion 1a(1b) becomes a dead space in the heat exchanger, and therefore there is plenty of space. In this embodiment, the inlet/outlet formation portion 1a(1b) with plenty of space is formed to be thicker, and the heat transfer portion 2 is formed to be thinner. Thus, it is possible to achieve thickness reduction while securing good heat exchange performance.

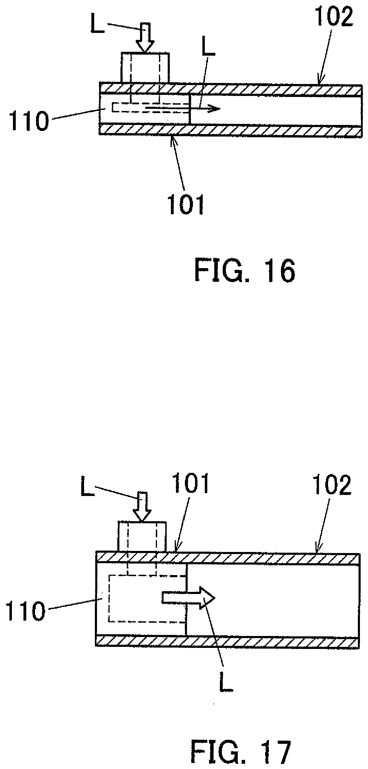

More specifically describing, in the heat exchange panel P using a laminate material as the coating sheet 6 as in this embodiment, the coating sheet 6 is high in flexibility and low in stiffness. For this reason, particularly in the inlet/outlet formation portion 1a(1b), it is preferable to provide a reinforcing member (spacer), such as, e.g., a header member 10, in order to secure the thickness of the inlet/outlet formation portion. The following description will now be directed to a case in which it is assumed that a heat exchange panel is produced in which the inlet/outlet formation portion 101 and the heat transfer portion 102 are set to have the same thickness, as shown in FIG. 16. In this case, if it is attempted to attain the thinning in a state in which the header member 110 is provided to the inlet/outlet formation portion 101, the thickness of the header member 110 becomes thinner, resulting in a narrow width of the inner flow passage (U-shaped groove). This reduces the flow properties of the cooling fluid L passing through the narrow inner flow path. This deteriorates the flow properties of the cooling fluid L over the entire range, resulting in reduced exchange performance (cooling performance). Note that, if the thickness of the header member 110 is increased to ensure the flow properties of the inner flow path of the header member 110, the thickness of the heat transfer portion 102 is also increased as shown in FIG. 17. Therefore, the thickness of the heat exchanger cannot be decreased.

In contrast, as shown in FIGS. 1 and 2, in the heat exchange panel P of this embodiment, the inlet/outlet formation portion 1a(1b) (header member 10a(10b)) having a sufficient space is increased in the thickness to decrease the thickness of the heat transfer portion 2 while securing a wider inner flow path. Therefore, it is possible to reduce the thickness of the entire battery cooling unit while improving the heat exchange performance by improving the flow properties of the cooling fluid L in the inlet/outlet formation portion 1a(1b).

Further, in the heat exchange panel P of this embodiment, the header member 10a(10b), which also serves as a reinforcing member (spacer), is arranged at the inlet/outlet formation portion 1a(1b). Therefore, it is possible to sufficiently secure the thickness of the inlet/outlet formation portion 1 even against the compressive stress or the like. This makes it possible to improve the flow properties of the cooling fluid L flowing through the inner space, thereby ensuring the heat exchange performance sufficiently. Further, the possible deformation due to the internal pressure caused by the cooling fluid L can also be prevented.

Further, in the heat exchange panel P of this embodiment, the spacer members 4 and 5 are arranged at the heat transfer portion 2. Therefore, even against compressive stress or the like, the flow path cross-section of the heat exchange flow path 20 of the heat transfer portion 2 can also be sufficiently secured. Also from this aspect, the flow properties of the cooling fluid L can be improved, thereby improving the heat exchange performance.

Further, in the heat exchange panel P of this embodiment, in a case where the thickness dimension T2 of the heat transfer portion 2 is set to 5 mm or less, a more excellent effect can be obtained by increasing the thickness of the inlet/outlet formation portion 1a(1b). That is, in a case where the thickness T of the heat transfer portion 2 is set to 5 mm or less, if the thicknesses of the inlet/outlet formation portion 101 and that of the heat transfer portion 102 are set to the same as shown in FIG. 16, the thickness of the inlet/outlet formation portion 101 becomes extremely thin, which prevents securing of a desired flow path cross-section. This significantly reduces the flow properties of the cooling fluid L, resulting in a significant reduction of the heat exchange performance. Therefore, in a case where the thickness dimension T2 of the heat transfer portion 2 is set to 5 mm or less, it is possible to significantly exert the effect of improving the flow properties due to the increase in the thick thickness of the inlet/outlet formation portion 1a(1b) as in this embodiment.

Particularly in this embodiment, in a case where the height dimension T3 of the heat exchange flow path 20 of the heat transfer portion 2 is set to 3 mm or less, for the same reason as described above, the flow properties and the heat exchange performance can be improved more effectively.

Further, the heat exchange panel P of this embodiment is formed in a parallel flow type in which the plurality of heat exchange flow paths 20 is arranged in parallel to flow the cooling fluid L from the header member 10a to the heat exchange flow paths 20 in a divided manner. Therefore, the cooling fluid L evenly passes through the heat exchange flow paths 20, which can cool the battery B evenly in the entire area of the heat transfer portion 2. For this reason, it is possible to cool the entire battery B as a heat exchange target member evenly, thereby further improving the cooling performance.

Further, in the heat exchange panel P of this embodiment, the joint pipes 3 and 3 provided at the inlet/outlet 15 of the upstream-side inlet/outlet formation portions 1a and the inlet/outlet 15 of the downstream-side inlet/outlet formation portion 1b are arranged on the front surface side. Therefore, all the pipes to be connected to the joint pipes 3 can be connected from one direction (from the front surface side), thereby reducing the piping routing space, which in turn can form the battery cooling unit more compactly.

Further, in the heat exchange panel P of this embodiment, the header members 10a and 10b and the spacer members 4 and 5 are integrally formed into the skeleton member, and the skeleton member is coated with the coating sheets 6. Therefore, the form is stable to effectively prevent the deformation of the form against the external pressure or the like, which enables to assuredly assemble in a stable state even within a limited installation space, such as, e.g., an electric vehicle. Furthermore, the spacer member 4 can also prevent deformation due to the internal pressure by the cooling fluid L.

Further, the heat exchange panel P of this embodiment is formed in a bag shape in which the entire area is covered by the coating sheet 6. Therefore, it is possible to reliably prevent a defect, such as, e.g., leakage of the cooling fluid L to the outside.

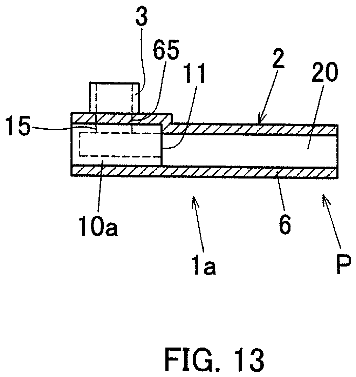

Note that in the heat exchange panel P of the above-described first embodiment, the front surface side of the inlet/outlet formation portion 1a and the rear surface side of the inlet/outlet formation portion 1b are formed so as to protrude with respect to the front surface side of the heat transfer portion 2 and the rear surface side of the heat transfer portion 2, respectively, but the present invention is not limited thereto. In the present invention, it may be configured such that only one of the front surface side of the inlet/outlet formation portion 1a and the rear surface side of the inlet/outlet formation portion 1b protrudes with respect to the front surface side of the heat transfer portion 2 or the rear surface side of the heat transfer portion 2. For example, as shown in FIG. 13, it may be configured such that the front surface side of the inlet/outlet formation portion 1a(1b) is formed to project on the front surface side with respect to the front surface of the heat transfer portion 2 and that the rear surface of the inlet/outlet formation portion 1a(1b) and the rear surface of the heat transfer portion 2 are arranged in the same plane. In short, it is sufficient to configure such that the external thickness T1 of the inlet/outlet formation portion 1a(1b) is formed to be thicker than the external thickness T2 of the heat transfer portion 2.

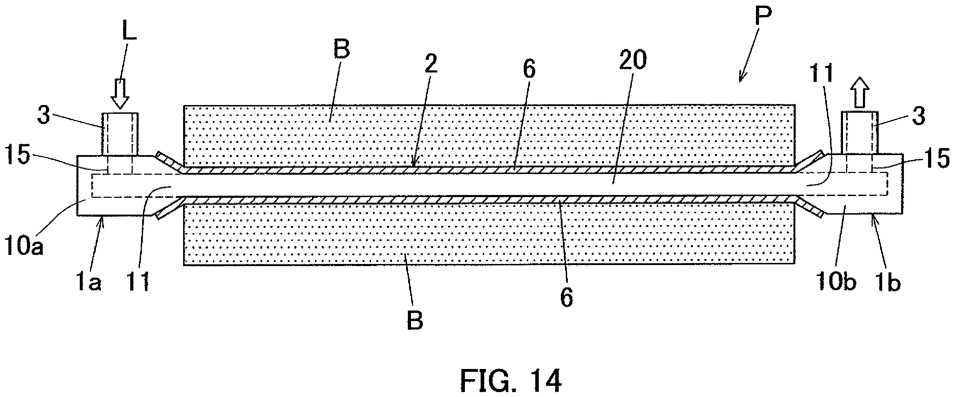

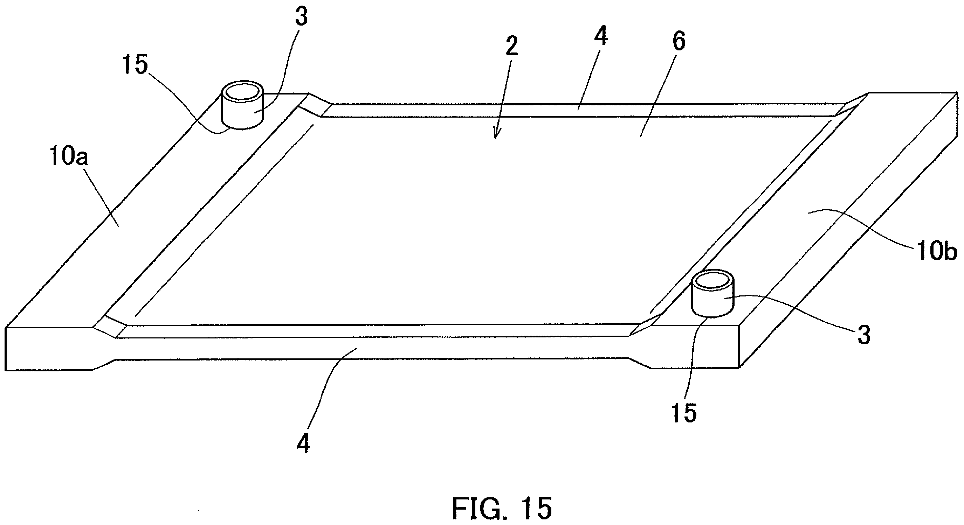

Further, in the heat exchange panel P of the above-described first embodiment, the coating sheet 6 is arranged so as to cover the entire area of the skeleton member 10a, 10b, 4, and 5, so that the coating sheets 6 are provided in the entire area of the inlet/outlet formation portion 1a(1b) and the heat transfer portion 2. However, the present invention is not limited thereto. In the present invention, it is sufficient that at least a part of the outer surface of the heat transfer portion 2 is configured by the coating sheet 6. For example, it may be configured as shown in FIGS. 14 and 15. That is, two coating sheets 6 are bonded to the front surface side of the spacer members 4 and 5 and the rear surface side of the spacer members 4 and 5 between the upstream-side header member 10a and the downstream-side header member 10b, respectively. The coating sheet 6 is substantially arranged only at the heat transfer portion 2, but not arranged at the inlet/outlet formation portions 1a and 1b. In the heat exchange panel P of this configuration, the outer surface portions of the heat transfer portion 2 are constituted by the coating sheets 6, and the outer surface portions of the inlet/outlet formation portions 1a and 1b are constituted by the outer surfaces of the headers 10a and 10b. Further, in the heat exchange panel P of this configuration, the external thickness of the inlet/outlet formation portion 1a(1b) corresponds to the external thickness of the header member 10a(10b).

Also in the heat exchange panel P of this modification, in the same manner as in the heat exchange panel P of the first embodiment, the cooling fluid L flows through the interior to cool the battery B or the like.

### <Second Embodiment>

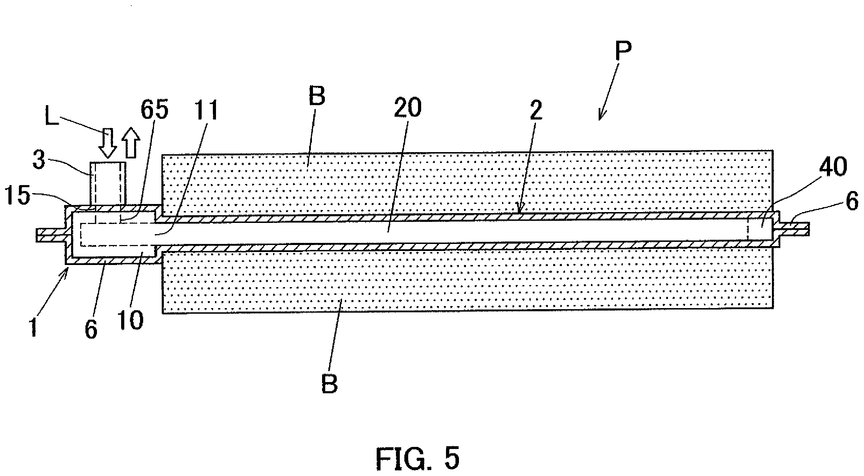

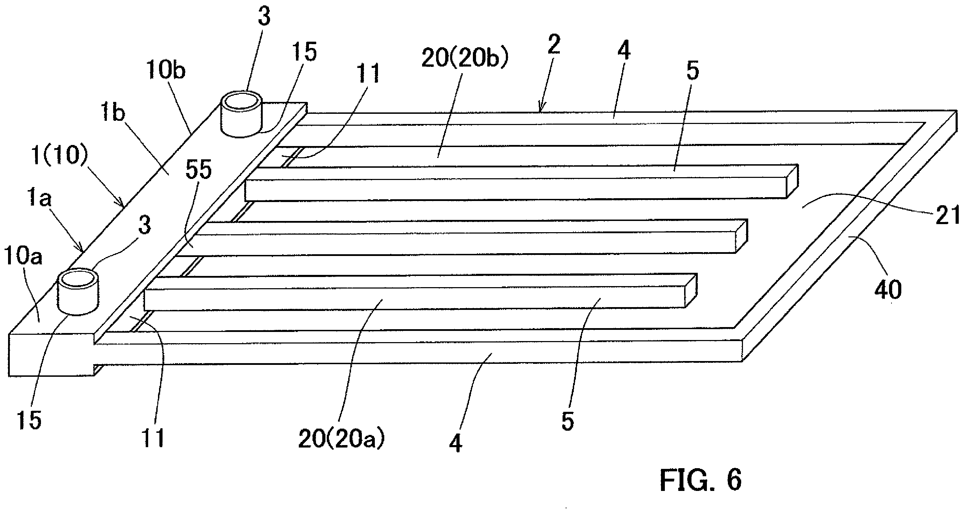

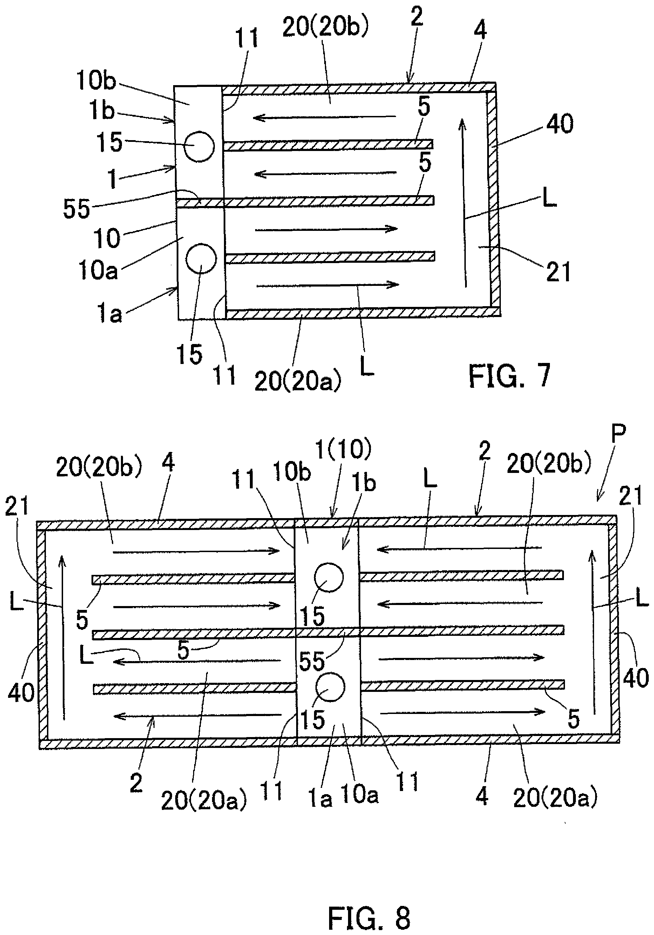

FIG. 5 is a cross-sectional view showing a battery cooling unit using a heat exchange panel P as a heat exchanger according to a second embodiment of the present invention. FIG. 6 is a perspective view showing the heat exchange panel P of the second embodiment in a state in which a coating sheet is removed. FIG. 7 is a plan view for explaining a flow of a cooling fluid L in the heat exchange panel P of the second embodiment.

As shown in these figures, the heat exchange panel P of this second embodiment is provided with a heat transfer portion 2 and an inlet/outlet formation portion 1 provided at one end edge portion of the heat transfer portion 2 in the longitudinal direction.

At the inlet/outlet formation portion 1, a single header member 10 extending continuously in the transverse direction is arranged. This header member 10 is formed in a rectangular tube shape. The header member 10 is provided with an opening portion 11 formed in the outer peripheral wall. The opening portion 11 opens toward the heat transfer portion 2 side.

Further, in the header member 10, the interior space thereof is partitioned by a partition wall 55 at a central position in the longitudinal direction (transverse direction). With this, one side half (the lower half in FIG. 7) of the header member 10 with respect to the partition wall 55 in the transverse direction serves an upstream-side header member 10a. The other side half (the upper half in FIG. 7) of the header member 10 serves as a downstream-side header member 10b. Note that in this embodiment, the partition wall 55 is configured by a part (extended portion) of the intermediate spacer member 5 as described later.

Here, in this embodiment, the portion corresponding to the upstream-side header member 10a of the heat exchange panel P serves as an upstream-side inlet/outlet formation portion 1a. The portion corresponding to the downstream-side header member 10b serves as a downstream-side inlet/outlet formation portion 1b.

Further, the upstream-side header member 10a and the downstream-side header member 10b are each provided with an inlet/outlet 15 formed in the wall portion on the front surface side. Further, one end of a joint pipe 3 is fixed to each header member 10a(10b). With this, the joint pipe 3 is arranged to protrude on the front surface side of the header member 10a(10b).

At both end portions of the header member 10, one end of a corresponding side frame spacer member 4 extending in the longitudinal direction is fixed. This side frame spacer member 4 is arranged along both side edge portions of the heat transfer portion 2.

Further, to the tip end portions of both the side frame spacer members 4, both end portions of an end frame spacer member 40 are connected. This end frame spacer member 40 is arranged along an edge of the heat transfer portion 2 opposite to the header member 10.

Further, one end portions of a plurality (three) of intermediate spacer members 5 extending along the longitudinal direction are fixed to the intermediate portion of the header member 10. The tip end portions (non-fixed-side end portions) of the respective intermediate spacer members 5 are arranged with a space from the end frame spacer member 40.

The intermediate spacer member 5 arranged corresponding to the longitudinal center position of the header member 10 out of the plurality of intermediate spacer members 5 has an extended end portion on the header member 10 side. The extended end portion serving as the partition wall 55 is fixed to the inside of the header member 10 via the opening portion 11. With this, as described above, the interior of the header member 10 is partitioned at the longitudinal center position by the partition wall 55 and is divided into the upstream-side header member 10a and the downstream-side header member 10b.

Note that the intermediate spacer members 5 arranged at positions other than the center position out of the plurality of intermediate spacer members 5 is fixed to the opening portion 11 of the header member 10 in the same manner as in the first embodiment. As a result, the inner space of the header member 10 is configured so as not to be obstructed by the spacer members 5.

Here, in this second embodiment, the skeleton member is formed by the header member 10 and the spacer members 4, 40, and 5.

Further, in this embodiment, a heat exchange flow path 20 as a hollow portion is formed between the adjacent spacer members including the side frames spacer members 4 and the intermediate spacer members 5. The heat exchange flow paths 20 out of the heat exchange flow paths corresponding to the upstream-side header member 10a serve as forward-side heat exchange flow paths 20a. The heat exchange flow paths 20 out of the heat exchange flow paths corresponding to the downstream-side header member 10b serve as return-side heat exchange flow paths 20b.

Further, between the non-fixed side end portions of the intermediate spacer members 5 and the end frame spacer member 40, a hollow portion extending continuously in the transverse direction is formed. This hollow portion serves as a turning heat exchange flow path 21.

In this second embodiment, in the same manner as in the above-described first embodiment, the entire area of the skeleton member 4, 5, 10, and 40 is covered from the front and rear surface sides by the two coating sheets 6, and the coating sheets 6 are bonded to the skeleton member by thermal fusion or the like, thereby forming the heat exchange panel P.

Also in the heat exchange panel P of this second embodiment, in the same manner as described above, at the position corresponding to the joint pipe 3 in the coating sheet 6, a pipe insertion hole 65 is formed. The joint pipe 3 is drawn out of the coating sheet 6 through the pipe insertion hole 65.

In the heat exchange panel P of this second embodiment, the other configurations are substantially the same as those of the heat exchange panel P of the first embodiment. Therefore, the same or corresponding portions are denoted by the same reference numerals, and the duplicate descriptions thereof will be omitted.

In the heat exchange panel P of the second embodiment, batteries B as heat exchange target members (cooling target members) are arranged so as to be in contact with the front and rear outer surfaces of the heat transfer portion 2 in the heat exchange panel P, thereby forming a battery cooling unit (heat exchanger unit).

In this battery cooling unit, a cooling fluid L flows in the upstream-side header member 10a through the joint pipe 3 and the inlet/outlet 15. The cooling fluid L is divided in the upstream-side header member 10a, flows through the forward heat exchange flow paths 20a, and flows into the turning heat exchange flow path 21. Further, the cooling fluid L is U-turned in the turning heat exchange flow path 21 and flows into the return-side heat exchange flow paths 20b. Subsequently, the cooling fluids L flow into the downstream-side header member 10b through the return-side heat exchange flow paths 20b and merge therein, and then flows out via the inlet/outlet 15 and the joint pipe 3. As described above, the cooling fluid L circulates in the respective heat exchange flow paths 20a, 20b, 21. Heat exchange is performed between the circulating cooling fluid L and the battery B via the coating sheet 6, thereby cooling the battery B.

The same effects as those of the above-described first embodiment can also be obtained in the heat exchange panel P of the second embodiment.

Furthermore, according to the heat exchange panel P of this second embodiment, the upstream-side header member 10a and the downstream-side header member 10b are arranged in series at one end edge portion of the heat exchange panel P in the longitudinal direction. Therefore, the pipes to be connected to the joint pipes 3 can be arranged collectively at one end edge portion of the heat exchange panel P, which makes it possible to produce a heat exchange panel P more compactly, thereby producing a battery cooling unit more compactly.

Further, in the heat exchange panel P of the second embodiment, by merely arranging the header member 10 at only one end edge portion of the heat exchange panel P in the longitudinal direction, the other end edge portion can be used as the heat exchange flow path 21. Therefore, the heat transfer area of the heat transfer portion 2 can be enlarged, thereby making it possible to exchange heat more efficiently.

### <Third Embodiment>

FIG. 8 is a plan view for explaining a flow of a cooling fluid L in a heat exchange panel P as a heat exchanger according to a third embodiment of the present invention.

As shown in the figure, the heat exchange panel P of this third embodiment is provided with an upstream-side inlet/outlet formation portion 1a and a downstream-side inlet/outlet formation portion 1b arranged in series, and two heat transfer portions 2 provided on both sides of the inlet/outlet formation portions 1a and 1b.

The inlet/outlet formation portion 1a(1b) is provided with a header member 10. The interior space of the header member 10 is partitioned at an intermediate position in the longitudinal direction by a partition wall 55. With this, one side half (lower half in FIG. 8) of the interior space with respect to the partition wall 55 serves as an upstream-side header member 10a. The other side half (upper half in FIG. 8) serves as a downstream-side header member 10b.

Further, the header members 10a and 10b are each provided with opening portions 11 formed in the outer peripheral walls so as to open toward the heat transfer portions 2 on both sides. Further, the header members 10a and 10b are each provided with an inlet/outlet 15 that opens toward one side (front surface side, etc.) in the thickness direction.

In the heat transfer portion 2 arranged on one side (right side in FIG. 8) of the header members 10a and 10b in the longitudinal direction, in the same manner as in the heat exchange panel P of the second embodiment shown in FIGS. 5 to 7 described above, one side skeleton portion is formed by the side frame spacer members 4, the end frame spacer member 40, and the intermediate spacer members 5.

Further, the heat transfer portion 2 arranged on the other side (left side in FIG. 8) of the header members 10a and 10b is symmetrical with respect to the one side heat transfer portion 2 and has substantially the same configuration as that of the one side heat transfer portion 2. That is, in the same manner as mentioned above, in the other side heat transfer portion 2, the other side skeleton portion is formed by the side frame spacer members 4 and 4, the end frame spacer member 40, and the intermediate spacer members 5.

The entire area of the skeleton member constituted by the header members 10a and 10b, the one side skeleton portion and the other side skeleton portion is covered by two coating sheets 6, and the coating sheets are bonded to the skeleton member by heat fusion or the like, in the same manner as in the above-described embodiment. With this, the heat exchange panel P of the third embodiment is formed.

In the heat exchange panel P of this third embodiment, the other configurations are substantially the same as those of the heat exchange panel P of the above-described embodiment. Therefore, the same or corresponding portions are denoted by the same reference numerals, and the duplicate descriptions thereof will be omitted.

In the heat exchange panel P of the third embodiment, batteries B or the like as a total of four heat exchange target members (see FIGS. 1 and 5, etc.) are arranged so as to come into contact with the front and rear outer surfaces of the two heat transfer portions 2 on both sides, thereby forming a cooling unit.

In this battery cooling unit, a cooling fluid L flows into the upstream-side header member 10a via the inlet/outlet 15, is divided within the inflow-side header member 10a, and flows into the forward side heat exchange flow paths 20a of the heat transfer portion 2 on both sides. The inflowed cooling fluid L flows into the corresponding turning heat exchange flow path 21 through the forward side heat exchange flow path 20a and U-turns. Then, the cooling fluids L flow into the respective return-side heat exchange flow paths 20b of the heat transfer portion 2 on both sides. Subsequently, the cooling fluids L flow into the downstream-side header member 20b through each return-side heat exchange flow path 20b on both sides, merge therein, and flow out of the inlet/outlet 15. Thus, the cooling fluid L circulates in the respective heat exchange flow paths 20a, 20b, 21. Heat exchange is performed between the circulating cooling fluid L and the battery B, thereby cooling the battery B.

The same effects as those of the above-described embodiment can be obtained in the heat exchange panel P of the third embodiment too.

Furthermore, in the heat exchange panel P of this third embodiment, the cooling fluid L can be supplied to the two heat transfer portions 2 on both sides by a single header member 10. Therefore, an inlet/outlet formation portion as a header member can be omitted, and the compactness can be further attained accordingly.

### <Fourth Embodiment>

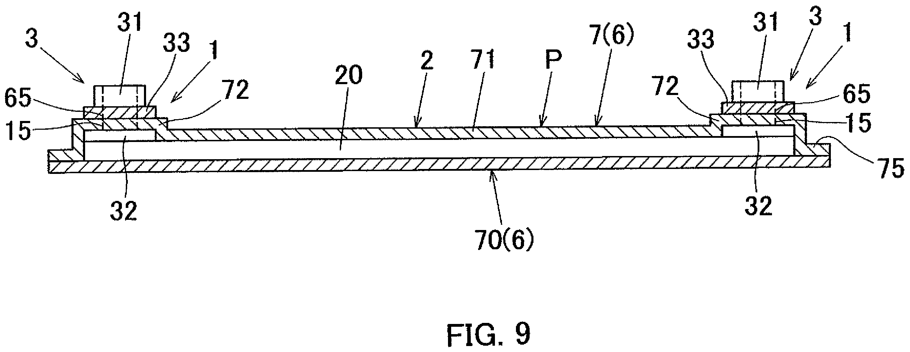

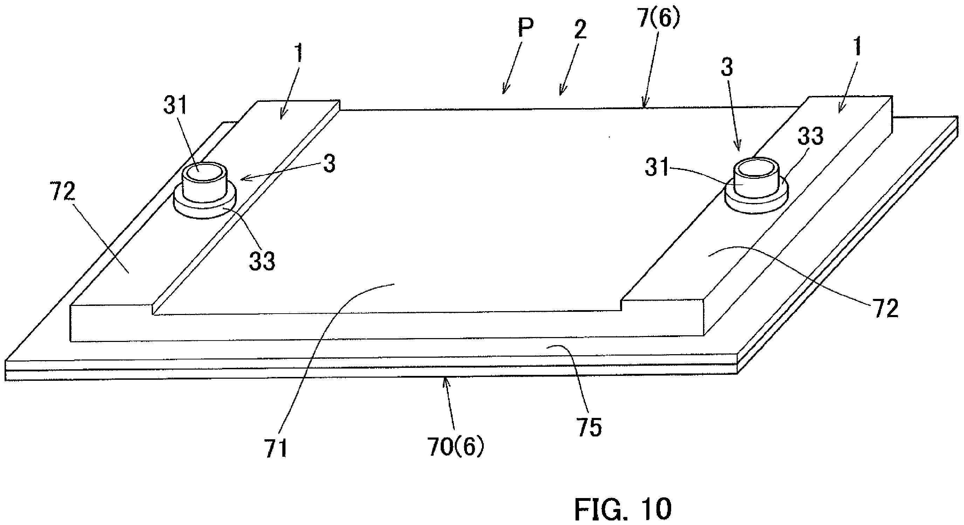

FIG. 9 is a cross-sectional view showing a heat exchange panel P as a heat exchanger according to a fourth embodiment of the present invention. FIG. 10 is a perspective view showing the heat exchange panel P of the fourth embodiment.

As shown in both figures, in the heat exchange panel P of this fourth embodiment, the packaging body is configured by a molded product 7 arranged on the front surface side and a cover sheet 70 arranged on the rear surface side of the molded product 7.

The molded product 7 is formed by thermoforming a laminate material as a coating sheet. The molded product 7 is formed in a substantially inverse tray shape. The molded product 7 is integrally provided with a heat transfer portion protruded portion 71 in which an intermediate portion except for the outer peripheral edge portion is protruded toward the front surface side, inlet/outlet formation portion protruded portions 72 in which both end portions of the heat transfer portion protruded portion 71 in the longitudinal direction are further protruded toward the front surface side, and a flange portion 75 provided on the rear surface side outer peripheral edge portion of the protruded portions 71 and 72.

The inlet/outlet formation portion projection 72 of the molded product 7 is provided with an inlet/outlet 15. A plastic joint pipe 3 is attached to the inlet/outlet 15. The joint pipe 3 is provided with, for example, a pipe body 31, a flange 32 provided on the proximal outer periphery of the pipe body 31, and a presser ring 33 capable of being externally fitted to the pipe body 31 from its distal end. The pipe body 31 is inserted to the inlet/outlet 15 from the rear surface side (inner surface side) of the molded product 7. The presser ring 33 is externally fitted to the pipe body 31 from the front surface side (outer surface side) of the molded product 7. In that state, the inner peripheral edge portion of the inlet/outlet 15 of the molded product 7, the pipe body 31, the flange 32, and the presser ring 33 are bonded by thermal fusion or the like. Thus, the joint pipe 3 is fixed to the molded product 7.

A cover sheet 70 is arranged on the rear surface side of the molded product 7. The outer peripheral edge portion of the flange portion 75 and the cover sheet 70 of the molded product 7 are bonded by thermal fusing or the like. With this, a packaging body (casing) is formed, and the heat exchange panel P of this fourth embodiment is formed. The inlet/outlet formation portions 1 are formed by the portions corresponding to the inlet/outlet formation portion protruded portions 72 on both sides of the heat exchange panel P. The heat transfer portion 2 is formed by a portion corresponding to the heat transfer portion protruded portion 71. Further, the hollow portion in the heat transfer portion 2 is configured as the heat exchange flow path 20.

Note that the inside of the heat transfer portion 2, an inner fin or the like is arranged as required.

In the heat exchange panel P of this fourth embodiment, a battery B as a heat exchange target member is arranged so as to be in contact with the front surface and/or the rear surface of the heat transfer portion 2, thereby forming a battery cooling unit (heat exchanger unit).

In this battery cooling unit, when a cooling fluid L flows into one (upstream-side) inlet/outlet formation portion 1 through the joint pipe 3, the cooling fluid L flows into the heat transfer portion 2. Further, the cooling fluid L flows into the other side (downstream-side) inlet/outlet formation portion 1 through the heat transfer portion 2 (heat exchange flow path 20) and flows out of the joint pipe 3. Thus, the cooling fluid L circulates in the heat exchange flow path 20. On the other hand, the heat is exchanged between the circulating cooling fluid L and the battery B, thereby cooling the battery B.

The same effects as described above can be obtained in the heat exchange panel P of the fourth embodiment too. Furthermore, in the heat exchange panel P of the fourth embodiment, there is no need to mount a header member, a spacer member, or the like. Accordingly, it is possible to reduce the number of parts, which in turn can improve the simplification of the configuration and the assembly workability.

In the heat exchange panel P of this fourth embodiment, however, a header member (reinforcing member) and/or a spacer member may be arranged.

### <Usage Examples>

In the heat exchange panel P as a heat exchanger of the present invention, the heat exchange panel P may be used alone, or a plurality of heat exchange panels P may be used in combination.

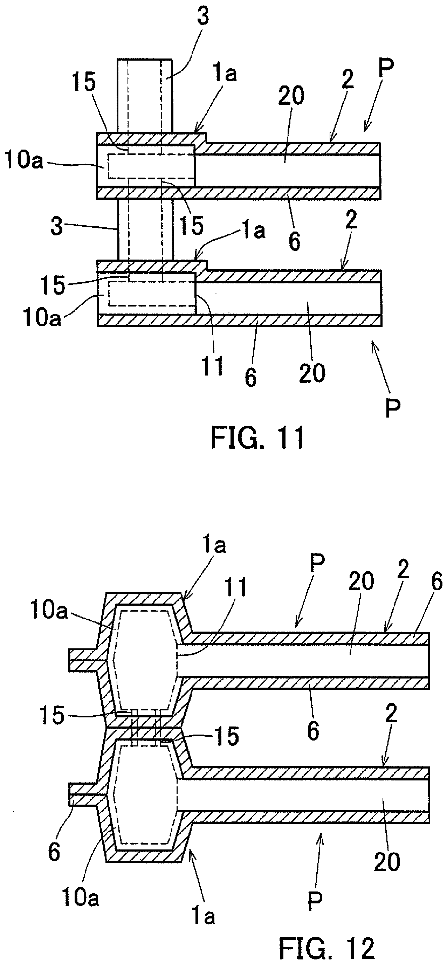

For example, as shown in FIG. 11, a heat exchange panel P and a heat exchange target member, such as, e.g., a battery B, are arranged alternately in parallel, and the corresponding inlet/outlet formation portions 1a of the adjacent heat exchange panels P are communicatively connected to each other via a joint pipe 3. Note that FIG. 11 shows only the periphery of the upstream-side inlet/outlet formation portion 1a, but the corresponding downstream-side inlet/outlet formation portions are communicatively connected to each other via a joint pipe or the like.

In this battery cooling unit, for example, a cooling fluid L flows into the upstream-side inlet/outlet formation portion 1a of the upper heat exchange panel P of FIG. 11 via the joint pipe 3. The cooling fluid L is partially divided and is guided to the downstream-side inlet/outlet formation portion 1b through the heat transfer portion 2 of the upper heat exchange panel P. On the other hand, the remaining cooling fluid L flows into the upstream-side inlet/outlet formation portion 1a of the lower heat exchange panel P through the joint pipe 3 and is guided to the downstream-side inlet/outlet formation portion 1b through the heat transfer portion 2. Further, the cooling fluid L introduced to the downstream-side inlet/outlet formation portion 1b of the heat exchange panel P is guided to the downstream-side inlet/outlet formation portion 1b of the heat exchange panel P via the joint pipe or the like. Then, the cooling fluid L merges the remaining cooling fluid L passed through the heat transfer portion 2 of the lower heat transfer portion P, then flowed out through a joint pipe or the like. Thus, heat is exchanged between the cooling fluid L circulating the heat transfer portion 2 of each heat exchange panel P and the battery B.

In the battery cooling unit of this usage example, the description is made by exemplifying the case in which two heat exchange panels P are used, but, needless to say, three or more heat exchange panels P may be used by arranging in parallel in the same manner as described above.

Further, in the usage example of FIG. 11 described above, the description is made by exemplifying the case in which the inlet/outlet formation portions 1a of the adjacent heat exchange panels P are connected to each other using the joint pipe 3. However, the adjacent heat exchange panels P may be directly connected in a communicated manner without using a joint pipe or the like.

For example, as shown in FIG. 12, the inlet/outlet formation portion 1(1a) of the heat exchange panel P is formed to be thick so that when the inlet/outlet formation portions 1 of the adjacent heat exchange panels P are stacked one on the other, a gap having a size capable of accommodating a heat exchange target member such as a battery B is formed between the heat transfer portions 2 of the adjacent heat exchange panels P. With this configuration, it is possible to produce a battery cooling unit by directly stacking the inlet/outlet formation portions 1 of the adjacent heat exchange panel P one on the other without using a joint pipe or the like.

In this battery cooling unit, there is no need to use a joint pipe. Therefore, the number of parts can be reduced accordingly, which simplifies the structure and improves the assembly workability.

This application claims priority to Japanese Patent Application No. 2019-161264, filed on September 4, 2019, the contents of which are incorporated herein by reference in their entirety.

The terms and expressions used herein are for illustration purposes only and are not used for limited interpretation, do not exclude any equivalents of the features shown and described. It should be recognized that the present invention allows various modifications within the scope of the present invention as claimed.

While the present invention may be embodied in many different forms, it is to be understood that this disclosure is to be regarded as providing an example of the principle of the present invention, and that examples are not intended to limit the present invention to the preferred embodiments described and/or illustrated herein, many illustrative embodiments are described herein.

While several illustrated embodiments of the present invention have been described herein, the present invention is not limited to the various preferred embodiments described herein, and encompasses any embodiments having equivalent elements, modifications, deletions, combinations (e.g., combinations of features across various embodiments), improvements and/or changes that may be recognized by those skilled in the art based on this disclosure. Claim limitations should be construed broadly based on the terminology used in claims and not limited to the examples set forth herein or in the processing of this application, and such examples should be construed as non-exclusive.

### Industrial Applicability

The heat exchanger of the present invention can be suitably used as a cooling device for cooling a heatgenerating element, such as, e.g., an electric motor driving battery device employed in, for example, hybrid vehicles, electric vehicles, or the like.

### Description of Symbols

1, 1a, 1b: Inlet/outlet formation portion
10, 10a, 10b: Header member
15: Inlet/outlet
2: Heat transfer portion
20, 20a, 20b: Heat exchange flow path
3: Joint pipe
4, 40, 5: Spacer member
6: Coating sheet
65: Pipe insertion hole
7: Formed product
B: Battery (heat exchange target member)
L: Cooling fluid (heat exchange medium)
P: Heat exchange panel (heat exchanger)
T1: Inlet/outlet formation portion thickness dimension (external dimension)
T2: Heat transfer portion thickness dimension (external dimension)
T3: Flow path height

## Claims

1. A heat exchanger comprising:
a heat transfer portion configured as a heat exchange flow path, the heat transfer portion including a hollow interior portion therein through which a heat exchange medium flows; and
an inlet/outlet formation portion provided with an inlet/outlet for introducing/discharging the heat exchange medium, an interior of the inlet/outlet formation portion being connected to the heat exchange flow path in a communicable manner,
wherein heat exchange is performed between the heat exchange medium passing through the heat exchange flow path and a heat exchange target member arranged on an outer surface of the heat transfer portion,
wherein at least a part of the outer surface of the heat transfer portion is configured by a coating sheet formed of a laminate material in which a resin coating layer is provided on at least one surface side of a metal heat transfer layer, and
wherein an external thickness of the inlet/outlet formation portion is formed to be thicker than an external thickness of the heat transfer portion.

2. The heat exchanger as recited in claim 1, wherein the inlet/outlet formation portion is provided with a reinforcing member having a function as a spacer for maintaining a thickness of the inlet/outlet formation portion.

3. The heat exchanger as recited in claim 1 or 2, wherein a spacer member configured to maintain a height of the heat exchange flow path is provided in the hollow interior portion of the heat transfer portion.

4. The heat exchanger as recited in any one of claims 1 to 3,
wherein the external thickness of the heat transfer portion is set to 5 mm or less.

5. The heat exchanger as recited in any one of claims 1 to 4,
wherein a plurality of heat exchange flow paths extends from one end edge portion of the heat transfer portion toward the other end edge portion thereof and is arranged in parallel to each other,
wherein the inlet/outlet formation portion includes an upstream-side header member arranged along an upstream-side end portions of the plurality of heat exchange flow paths and a downstream-side header member arranged along downstream-side end portions of the plurality of heat exchange flow paths, and
wherein the heat exchange medium flowed into the upstream-side header member via the inlet/outlet is divided and flowed into each of the plurality of heat exchange flow paths, and the divided heat exchange mediums flowed out of the plurality of heat exchange flow paths are merged in the downstream-side header member and flowed out of the inlet/outlet of the downstream-side header member.

6. The heat exchanger as recited in any one of claims 1 to 5,
wherein when one surface side in a thickness direction is defined as a front surface side, and the other surface side in the thickness directions is defined as a rear surface side,
a front surface side of the inlet/outlet formation portion is arranged so as to protrude on the front surface side with respect to a front surface side of the heat transfer portion, and the rear surface side of the inlet/outlet formation portion is arranged so as to protrude on the rear surface side with respect to a rear surface side of the heat transfer portion.

7. The heat exchanger as recited in any one of claims 1 to 6,
wherein a plurality of inlet/outlet formation portions is provided, and
wherein the inlet/outlets of the plurality of inlet/outlet formation portions are opened toward one side in a thickness direction.

8. The heat exchanger as recited in any one of claims 1 to 7,
wherein the heat transfer portion is provided on both sides of the inlet/outlet formation portion.

9. The heat exchanger as recited in any one of claims 1 to 8,
wherein a height of the heat exchange flow path is set to 3 mm or less.

10. The heat exchanger as recited in any one of claims 1 to 9,
wherein a spacer member for maintaining a height of the heat exchange flow path is provided in the hollow portion of the heat transfer portion,
wherein a reinforcing member having a function as a spacer for maintaining a thickness is provided in the inlet/outlet formation portion, and
wherein the spacer member and the reinforcing member are integrally formed.

11. The heat exchanger as recited in any one of claims 1 to 10,
wherein the coating sheet is arranged so as to cover an entire area of the heat transfer portion.

12. The heat exchanger as recited in any one of claims 1 to 11,
wherein the coating sheet is arranged so as to cover an entire peripheral surface.

13. The heat exchanger of any one of claims 1 to 12,
wherein at least a part of the coating sheet is configured by a molded product.
